(19) Europäisches Patentamt
European Patent Office
Office européen des brevets

(11) **EP 4 651 336 A1**

(12) **EUROPEAN PATENT APPLICATION**
published in accordance with Art. 153(4) EPC

(43) Date of publication:
**19.11.2025 Bulletin 2025/47**

(51) International Patent Classification (IPC):
*H02J 7/00* (2006.01)

(21) Application number: 24867129.9

(22) Date of filing: 02.08.2024

(86) International application number:
**PCT/CN2024/109659**

(87) International publication number:
**WO 2025/060712 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.09.2023 CN 202311227254**

(71) Applicant: Honor Device Co., Ltd.
**Shenzhen, Guangdong 518040 (CN)**

(72) Inventors:
• **DENG, Xutong**
**Shenzhen, Guangdong 518040 (CN)**
• **WANG, Feng**
**Shenzhen, Guangdong 518040 (CN)**
• **JI, Qing**
**Shenzhen, Guangdong 518040 (CN)**
• **ZHAO, Manping**
**Shenzhen, Guangdong 518040 (CN)**
• **QIN, Yonghui**
**Shenzhen, Guangdong 518040 (CN)**

(74) Representative: **Thun, Clemens
Mitscherlich PartmbB
Patent- und Rechtsanwälte
Karlstraße 7
80333 München (DE)**

(54) **POWER SUPPLY CIRCUIT AND ELECTRONIC DEVICE**

(57) This application discloses a power supply circuit and an electronic device, and relates to the field of circuit technologies. In the power supply circuit, a first electronic component and a second electronic component are electronic components that generate a large peak current during operation. The first electronic component is independent of a power consumption module and directly connected to a first battery, so that an impedance between the first electronic component and the first battery can be reduced, thereby reducing a voltage drop formed when the first electronic component generates a peak current during operation. The second electronic component is independent of the power consumption module and directly connected to a second battery, so that a voltage drop formed when the second electronic component generates a peak current during operation can be reduced. Triggering of an undervoltage lockout mechanism of an electronic device can be avoided by reducing a voltage drop formed when an electronic component generates a peak current during operation, thereby improving operating stability of the electronic device.

FIG. 7

## Description

This application claims priority to Chinese Patent Application No. 202311227254.2, filed with the China National Intellectual Property Administration on September 22, 2023 and entitled "POWER SUPPLY CIRCUIT AND ELECTRONIC DEVICE", which is incorporated herein by reference in its entirety.

## TECHNICAL FIELD

This application relates to the field of circuit technologies, and in particular, to a power supply circuit and an electronic device.

## BACKGROUND

A mobile phone, a tablet computer, a notebook computer or another electronic device may include two batteries, which may be referred to as a first battery and a second battery. The electronic device further includes a charging and discharging chip. During operation of the electronic device, the first battery and the second battery supply power to electronic components in the electronic device through the charging and discharging chip.

In the related art, an impedance module is further connected between the first battery and the second battery, so that the first battery and the second battery can simultaneously output electric energy to the charging and discharging chip by adjusting an impedance of the impedance module.

However, due to impact of the impedance module and the charging and discharging chip, large impedances exist between the first battery and the electronic component and between the second battery and the electronic component. In this case, when a large peak current is generated by an electronic component during operation, a large voltage drop is generated in a power supply circuit. In this way, an undervoltage lockout mechanism of the electronic device tends to be triggered, which is not conducive to stable operation of the electronic device.

## SUMMARY

This application provides a power supply circuit and an electronic device, to avoid a large voltage drop generated in the power supply circuit when a large peak current is generated by an electronic component during operation, thereby improving operating stability of the electronic device. The technical solutions are as follows:

According to a first aspect, a power supply circuit is provided. The power supply circuit is used in an electronic device, and includes an impedance module, a first battery, a first electronic component, a charging and discharging chip, a second battery, a second electronic component, and a power consumption module.

The power consumption module may include one or more electronic components. Both the first electronic component and the second electronic component are electronic components other than the power consumption module. During operation of the electronic device, the first battery and/or the second battery need/needs to supply power to the first electronic component, the second electronic component, and the electronic components in the power consumption module. In this application, a peak current generated by the first electronic component during operation is greater than or equal to a first threshold. The peak current is a difference between a maximum current value and an average current value that are generated by the electronic component during operation. The first threshold is a current threshold used for determining whether the peak current generated by the electronic component during operation is large. A peak current generated by the second electronic component during operation is also greater than or equal to the first threshold. In other words, both the first electronic component and the second electronic component generate a large peak current during operation.

The first electronic component is directly connected to the first battery, to enable the first battery to separately supply power to the first electronic component. The second electronic component is directly connected to the second battery, to enable the second battery to separately supply power to the second electronic component. A first end of the impedance module is connected to the first battery, a second end of the impedance module is connected to the second battery and a first end of the charging and discharging chip, and a second end of the charging and discharging chip is connected to the power consumption module, to enable the first battery and the second battery to supply power to one or more electronic components in the power consumption module through the charging and discharging chip.

In this application, the power supply circuit includes an impedance module, a first battery, a first electronic component, a charging and discharging chip, a second battery, a second electronic component, and a power consumption module. The first battery and the second battery jointly supply power to the power consumption module through the charging and discharging chip. Compared with that either of the first battery and the second battery supplies power to the power consumption module through the charging and discharging chip, operating duration of the power consumption module can be increased, thereby ensuring endurance of the electronic device in which the power supply circuit is used. The first electronic component and the second electronic component are electronic components that generate a large peak current during operation. Instead of being connected to the first battery by the charging and discharging chip and the impedance module, the first electronic component is independent of the power consumption module and directly connected to the first battery, so that an impedance between the first electronic component and the first battery can be reduced, thereby reducing a voltage drop formed when the first electronic component generates a peak current during operation. Similarly, the second electronic component is independent of the power consumption module and directly connected to the second battery. In this way, a voltage drop formed when the second electronic component generates a peak current during operation can also be reduced. Triggering of an undervoltage lockout mechanism of an electronic device can be avoided by reducing a voltage drop formed when an electronic component generates a peak current during operation, thereby improving operating stability of the electronic device. In addition, both the first battery and the second battery are directly connected to the electronic component. Compared with that only one of the first battery and the second battery is connected to the electronic component, this is more conducive to keeping a voltage difference between the two batteries small, thereby improving the operating stability of the electronic device.

In some embodiments, both the first electronic component and the second electronic component may be audio power amplifiers or radio frequency power amplifiers.

In some embodiments, both the first electronic component and the second electronic component are electronic components with a large peak current and a small average current. The average current is an average current value generated by the electronic components during operation. For example, the first electronic component and the second electronic component may be electronic components that generate an average current value less than or equal to a second threshold during operation. The large peak current and the small average current are relative to other electronic components in the power consumption module.

In some embodiments, the power consumption module includes a plurality of electronic components. Any one of the plurality of electronic components of the power consumption module is an electronic component with a small peak current and a large average current.

For example, a peak current of any one of the plurality of electronic components of the power consumption module is less than a third threshold. The third threshold is less than or equal to the first threshold. In other words, the peak current of any one of the plurality of electronic components of the power consumption module is definitely less than the first threshold.

For example, an average current of any one of the plurality of electronic components of the power consumption module is greater than a fourth threshold. The fourth threshold is greater than or equal to the second threshold. In other words, the average current of any one of the plurality of electronic components of the power consumption module is definitely greater than the second threshold.

In some embodiments, a rated capacity of the first battery is different from a rated capacity of the second battery. In this case, to keep a voltage difference between the two batteries as small as possible, an electronic component in the first electronic component and the second electronic component that consumes more electric energy can be connected to a battery in the first battery and the second battery that has a larger rated capacity, and an electronic component in the first electronic component and the second electronic component that consumes less electric energy can be connected to a battery in the first battery and the second battery that has a smaller rated capacity.

For example, in some specific embodiments, a rated capacity of the first battery is greater than a rated capacity of the second battery, and power consumption of the first electronic component within preset duration is greater than power consumption of the second electronic component within the preset duration.

For another example, in some other specific embodiments, a rated capacity of the first battery is greater than a rated capacity of the second battery. An average current of the first electronic component is greater than an average current of the second electronic component. In other words, in a case that the average currents are not equal, an amount of electric energy consumed by the electronic component during operation may be determined according to a magnitude of the average current generated by the electronic component during operation.

In some other embodiments, a rated capacity of the first battery is different from a rated capacity of the second battery, and each of the first battery and the second battery may be directly connected to a plurality of electronic components. In this case, to keep the voltage difference between the two batteries as small as possible, an electronic component connected to a battery having a larger rated capacity consumes more electric energy, and an electronic component connected to a battery having a smaller rated capacity consumes less electric energy.

For example, in some specific embodiments, the power supply circuit further includes a third electronic component. The third electronic component is connected to the first battery. A sum of power consumption of the first electronic component within preset duration and power consumption of the third electronic component within the preset duration is greater than power consumption of the second electronic component within the preset duration.

In some embodiments, the impedance module includes a first transistor, a second transistor, and a controller. A first end of the first transistor is connected to the first battery and the first electronic component. A second end of the first transistor is connected to a first end of the second transistor. A second end of the second transistor is connected to the first end of the charging and discharging chip, the second battery, and the second electronic component. The controller is connected to a control end of the first transistor and a control end of the second transistor. The controller is configured to control voltages of the control end of the first transistor and the control end of the second transistor, to enable a voltage outputted by the first battery to the first end of the charging and discharging chip through the impedance module to be equal to a voltage outputted by the second battery to the first end of the charging and discharging chip.

In some embodiments, the impedance module further includes: a first resistor, a third transistor, a first capacitor, a second resistor, a second capacitor, and a third resistor. A first end of the first resistor is connected to the second end of the first transistor and the first end of the second transistor. A second end of the first resistor is connected to a first end of the third transistor, the control end of the first transistor, and the control end of the second transistor, and a second end of the third transistor is connected to a ground cable. A first plate of the first capacitor is connected to the first end of the third transistor, and a second plate of the first capacitor is connected to the second end of the third transistor. A first end of the second resistor is connected to the controller, and a second end of the second resistor is connected to a control end of the third transistor. A first plate of the second capacitor is connected to the control end of the third transistor, and a second plate of the second capacitor is connected to the second end of the third transistor. A first end of the third resistor is connected to the control end of the third transistor, and a second end of the third resistor is connected to the second end of the third transistor.

According to a second aspect, an electronic device is further provided, including the power supply circuit according to any one of the first aspect.

In some embodiments, the electronic device includes a first structural member and a second structural member. The first structural member is movably connected to the second structural member. The impedance module, the first battery, and the first electronic component are located on the first structural member. The second battery and the second electronic component are located on the second structural member. The charging and discharging chip is located on either of the first structural member and the second structural member.

In some embodiments, the charging and discharging chip is located on the first structural member; and the second battery is connected to the first end of the charging and discharging chip by a flexible printed circuit.

The technical effect obtained by the second aspect is similar to the technical effect obtained by the corresponding technical means in the first aspect, and details are not described herein again.

**BRIEF DESCRIPTION OF DRAWINGS**

FIG. 1 is a schematic diagram of an appearance of an electronic device in the related art in a first direction;
FIG. 2 is a schematic diagram of an appearance of an electronic device in the related art in a second direction;
FIG. 3 is a schematic diagram of an internal structure of an electronic device in the related art;
FIG. 4 is a circuit structure diagram of a power supply circuit of an electronic device in the related art;
FIG. 5 is a circuit structure diagram of a first power supply subcircuit in the related art;
FIG. 6 is a circuit structure diagram of a second power supply subcircuit in the related art;
FIG. 7 is a circuit structure diagram of a first power supply circuit according to an embodiment of this application;
FIG. 8 is a current curve diagram of a first electronic component during operation according to an embodiment of this application;
FIG. 9 is a schematic diagram of an internal structure of a charging and discharging chip according to an embodiment of this application;
FIG. 10 is a circuit structure diagram of a first power supply subcircuit according to an embodiment of this application;
FIG. 11 is a circuit structure diagram of a second power supply subcircuit according to an embodiment of this application;
FIG. 12 is an equivalent circuit diagram of a first power supply subcircuit according to an embodiment of this application;
FIG. 13 is a circuit structure diagram of a second power supply circuit according to an embodiment of this application;
FIG. 14 is a current curve diagram of a second electronic component during operation according to an embodiment of this application;
FIG. 15 is a circuit structure diagram of a third power supply circuit according to an embodiment of this application;
FIG. 16 is a circuit structure diagram of a fourth power supply circuit according to an embodiment of this application;
FIG. 17 is a circuit diagram of a first power supply circuit according to an embodiment of this application;
FIG. 18 is a circuit structure diagram of a fifth power supply circuit according to an embodiment of this application;
FIG. 19 is a circuit diagram of an impedance module according to an embodiment of this application;
FIG. 20 is a waveform diagram of a PWM signal according to an embodiment of this application;
FIG. 21 is a waveform diagram of an output signal of a filter unit according to an embodiment of this application;
FIG. 22 is a circuit diagram of a second power supply circuit according to an embodiment of this application; and
FIG. 23 is a circuit diagram of a third power supply circuit according to an embodiment of this application.

Meanings represented by reference numerals are respectively:
10: electronic device; 12: first structural member; 14: second structural member; and 16: hinge;

Related art:

11: power supply circuit; 11A: first power supply subcircuit; 11B: second power supply subcircuit; 112: first battery; 114: second battery; 120: impedance module; 130: charging and discharging chip; and 140: power consumption module;
This application:
21: power supply circuit; 21A: first power supply subcircuit; 21B: second power supply subcircuit; 212: first battery; 214: second battery; 220: impedance module; 222: impedance conversion unit; 224: controller; 226: impedance control unit; 228: filter unit; 230: charging and discharging chip; 232: voltage conversion circuit; 240: power consumption module; 252: first electronic component; 254: second electronic component; and 256: third electronic component.

## DESCRIPTION OF EMBODIMENTS

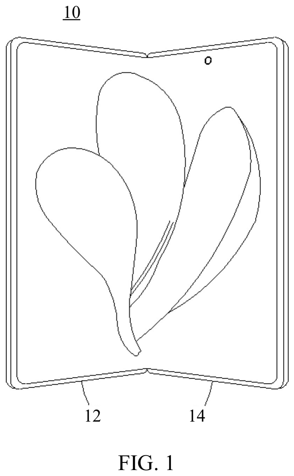

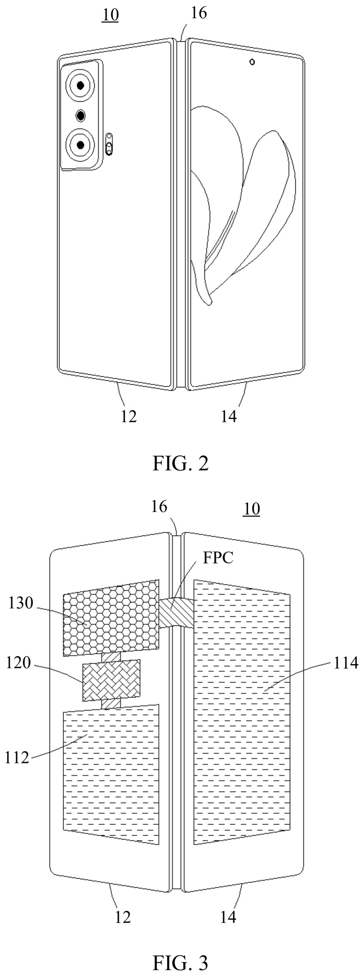

To make the objectives, technical solutions, and advantages of this application clearer, the following further describes the implementations of this application in detail with reference to the accompanying drawings.
It should be understood that "plurality of" mentioned in this application means two or more. In the descriptions of this application, unless otherwise stated, "/" means "or". For example, A/B may represent A or B. The term "and/or" used herein describes only an association relationship for describing associated objects and represents that three relationships may exist. For example, A and/or B may represent the following three cases: Only A exists, both A and B exist, and only B exists. In addition, for ease of describing the technical solutions in this application clearly, terms such as "first" and "second" are used to distinguish same or similar items with roughly same functions and roles. A person skilled in the art may understand that the terms such as "first" and "second" do not limit a quantity or an execution sequence, and the terms such as "first" and "second" do not indicate a definite difference.
Before a power supply circuit provided in embodiments of this application is described in detail, application scenarios and related technologies of the power supply circuit are first described.
With the rapid development of electronic devices, the electronic devices such as a foldable-screen mobile phone, a tablet computer, and a notebook computer may include two batteries. An example in which an electronic device 10 is a foldable-screen mobile phone is used. FIG. 1 is a schematic diagram of an appearance of the electronic device 10 in the related art in a first direction. FIG. 2 is a schematic diagram of an appearance of the electronic device 10 in the related art in a second direction. The first direction and the second direction are two opposite directions. As shown in FIG. 1 and FIG. 2, the electronic device 10 may include a first structural member 12 and a second structural member 14. The first structural member 12 and the second structural member 14 are movably connected, so that both the first structural member 12 and the second structural member 14 can rotate around a connection. In some specific embodiments, as shown in FIG. 1 and FIG. 2, the first structural member 12 and the second structural member 14 are movably connected by a hinge 16.
FIG. 3 is a schematic diagram of an internal structure of the electronic device 10 in the related art. For ease of description, the two batteries in the electronic device 10 are respectively referred to as a first battery 112 and a second battery 114. As shown in FIG. 3, the first battery 112 may be located in the first structural member 12, and the second battery 114 may be located in the second structural member 14. The electronic device 10 further includes a charging and discharging chip 130. The charging and discharging chip 130 may be located in the first structural member 12 or the second structural member 14. In an embodiment shown in FIG. 3, the charging and discharging chip 130 is located on the first structural member 12.

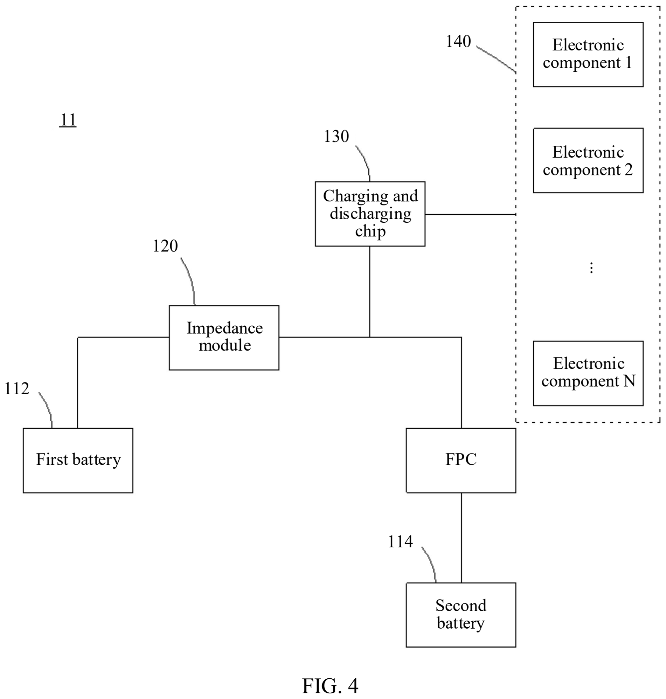

FIG. 4 is a circuit structure diagram of a power supply circuit 11 of the electronic device 10 in the related art, and the power supply circuit 11 shown in FIG. 4 corresponds to the internal structure of the electronic device 10 shown in FIG. 3. As shown in FIG. 4, the electronic device 10 further includes a power consumption module 140 (not shown in FIG. 3). The power consumption module 140 may include N electronic components, where N is a positive integer. The electronic component is a component to which electric energy needs to be inputted in the electronic device 10 during operation. For example, the electronic component may be a power management integrated circuit (power management integrated circuit, PMIC), a system on chip (system on chip, SOC), a mobile communication module, a wireless communication module, an audio module, a sensor module, a motor, an indicator, a camera, and a display in the electronic device 10. Both the mobile communication module and the wireless communication module may include a filter, a switch, a radio frequency power amplifier, a low noise amplifier (low noise amplifier, LNA), and the like. The audio module may include an audio power amplifier, and a speaker, a receiver, a microphone, a headset jack, and the like connected to the audio power amplifier. The sensor module may include a pressure sensor, a gyroscope, a barometric pressure sensor, a magnetic sensor, an acceleration sensor, a distance sensor, an optical proximity sensor, a fingerprint recognition device, a temperature sensor, a touch sensor, an ambient light sensor, a bone conduction sensor, and the like.
The charging and discharging chip 130 includes a first end and a second end. Both the first battery 112 and the second battery 114 need to be connected to the first end of the charging and discharging chip 130, and the second end of the charging and discharging chip 130 is connected to the power consumption module 140, so that during operation of the electronic device 10, the first battery 112 and the second battery 114 can supply power to a plurality of electronic components in the power consumption module 140 through the charging and discharging chip 130.

In the related art, as shown in FIG. 3 and FIG. 4, when the first battery 112 and the charging and discharging chip 130 are located on the first structural member 12, and the second battery 114 is located on the second structural member 14, to connect the second battery 114 to the charging and discharging chip 130, the electronic device 10 further includes a flexible printed circuit (flexible printed circuit, FPC). The FPC extends from the first structural member 12 to the second structural member 14 across the hinge 16, and the charging and discharging chip 130 in the first structural member 12 and the second battery 114 in the second structural member 14 transmit an electrical signal through the FPC. In this case, since the FPC has a large length and a large impedance, an impedance module 120 is further connected between the first battery 112 and the first end of the charging and discharging chip 130. An impedance of the impedance module 120 is adjustable. By adjusting the impedance of the impedance module 120, a voltage outputted by the first battery 112 to the first end of the charging and discharging chip 130 through the impedance module 120 may be equal to a voltage outputted by the second battery 114 to the first end of the charging and discharging chip 130 through the FPC, so that the first battery 112 and the second battery 114 simultaneously output electric energy to the charging and discharging chip 130.

However, due to impact of the impedance module 120 and the charging and discharging chip 130, an impedance between the first battery 112 and the plurality of electronic components of the power consumption module 140 is large. Similarly, due to impact of the FPC and the charging and discharging chip 130, an impedance between the second battery 114 and the plurality of electronic components of the power consumption module 140 is also large. In this case, when any electronic component in the power consumption module 140 generates a large peak current during operation, a large voltage drop is generated in the power supply circuit 11, which tends to trigger an undervoltage lockout (undervoltage lockout, UVLO) mechanism of the electronic device 10, and is not conducive to stable operation of the electronic device 10.

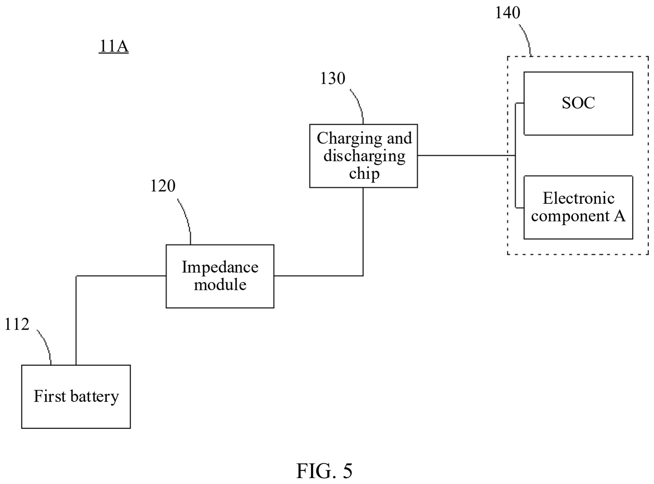

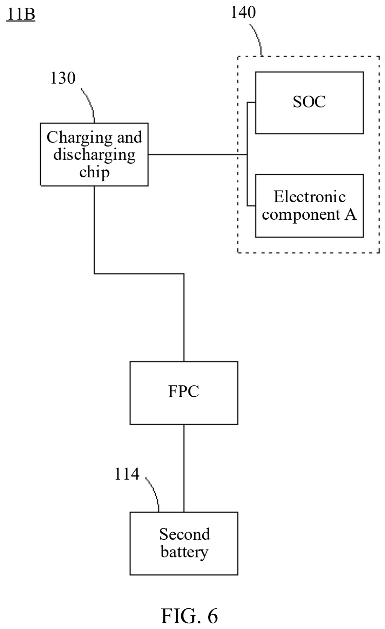

For example, a circuit in which the first battery 112 supplies power to the power consumption module 140 through the impedance module 120 and the charging and discharging chip 130 is referred to as a first power supply subcircuit 11A; and a circuit in which the second battery 114 supplies power to the power consumption module 140 through the FPC and the charging and discharging chip 130 is referred to as a second power supply subcircuit 11B. In the related art, the first power supply subcircuit 11A may be shown in FIG. 5, and the second power supply subcircuit 11B may be shown in FIG. 6.

In an embodiment shown in FIG. 5, the electronic components in the power consumption module 140 include an SOC and an electronic component A. It is assumed that during operation of the electronic component A, a large peak current is generated. In this case, during operation of the electronic component A, a voltage drop generated in the first power supply subcircuit 11A (i.e., a voltage drop from the first battery 112 to the second end of the charging and discharging chip 130) is: $U_1 = I_1 R$. $U_1$ is a voltage drop generated in the first power supply subcircuit 11A during operation of the electronic component A; $I_1$ is a current outputted by the first battery 112 to the electronic component A during operation of the electronic component A; and is a sum of an impedance of a lead wire in the first power supply subcircuit 11A, an impedance of the impedance module 120, and an impedance of the charging and discharging chip 130.

An input voltage of the SOC is equal to a voltage of the second end of the charging and discharging chip 130. The input voltage of the SOC is: $VPH = VBAT - U_1$. $VPH$ is the input voltage of the SOC, and $VBAT$ is a voltage of the first battery 112.

It can be seen that when the electronic component A generates the large peak current during operation, the current $I_1$ outputted by the first battery 112 to the electronic component A also generates a peak value, and the voltage drop generated in the first power supply subcircuit 11A is also large.

For example, during operation of the electronic device 10, a maximum voltage of the first battery 112 is 4.45 V (volt), and a minimum voltage of the first battery 112 is 2.8 V. A lower power level of the first battery 112 indicates a lower voltage. A rated voltage of the SOC is generally 2.7 V, and a UVLO voltage of the SOC is generally 2.35 V. When the current outputted by the first battery 112 to the electronic component A is 5 A (ampere), and $R$ is 100 mQ (milliohm), it can be learned from the foregoing formula that the voltage drop generated in the first power supply subcircuit 11A is equal to 500 mV (millivolt), i.e., 0.5 V. If the power level of the first battery 112 is low in this case, and the voltage of the first battery 112 is 3 V, due to the voltage drop generated in the first power supply subcircuit 11A, the input voltage of the SOC is only 2.5 V, which is lower than the rated voltage of the SOC and is close to the UVLO voltage of the SOC. This is likely to cause undervoltage lockout of the SOC. If the current $I_1$ generated by the electronic component A during operation is larger, for example, $I_1$ is 6.5 A, the SOC may be directly locked. In this case, the electronic device 10 is abnormal and shuts down.

The second power supply subcircuit 11B also has the same problem as the first power supply subcircuit 11A, and details are not described again. Therefore, when the voltages of the first battery 112 and the second battery 114 are low in the related art, the input voltage of the SOC may be lower than the rated voltage of the SOC, causing the electronic device 10 to freeze. The input voltage of the SOC may even be lower than the UVLO voltage of the SOC, causing the electronic device 10 to shut down abnormally, which is not conducive to the stable operation of the electronic device 10.

Therefore, embodiments of this application provide a power supply circuit and an electronic device, to avoid a large voltage drop generated in the power supply circuit when an electronic component generates a large peak current during operation, thereby improving operating stability of the electronic device.

The power supply circuit provided in embodiments of this application is described in detail below. In embodiments of this application, any connection between electrical modules or electronic components is an electrical connection. The electrical connection is a connection through a lead wire, so that an electrical signal can be transmitted between two electrical modules and/or electronic components. The connection between the two electrical modules or the two electronic components may be a direct connection, or may be an indirect connection through another electrical module and/or electronic component.

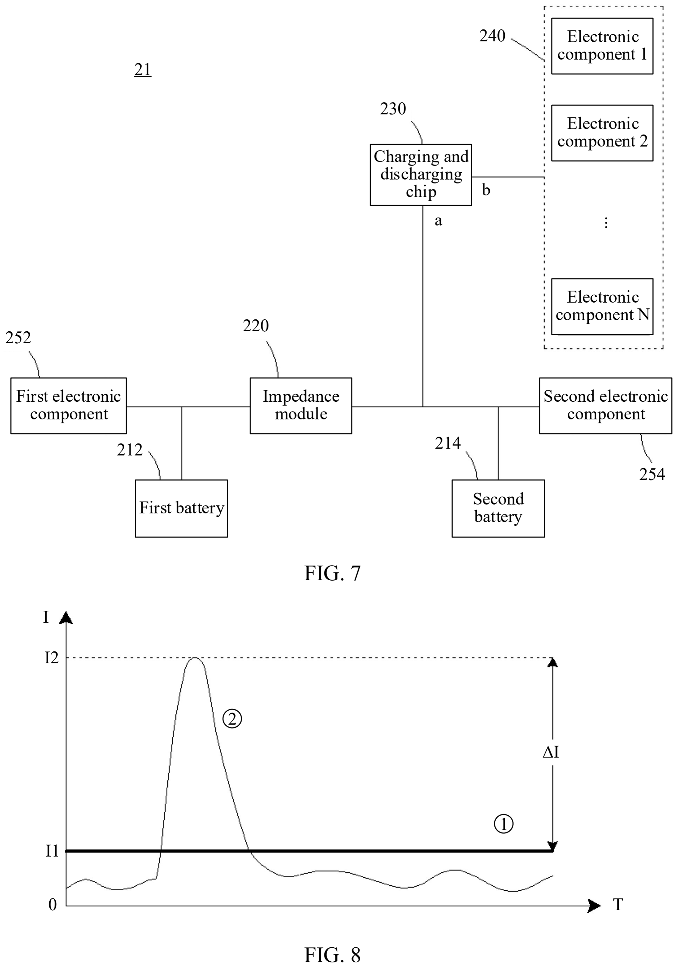

FIG. 7 is a circuit structure diagram of a power supply circuit 21 according to an embodiment of this application. As shown in FIG. 7, the power supply circuit 21 includes an impedance module 220, a first battery 212, a first electronic component 252, a charging and discharging chip 230, a second battery 214, a second electronic component 254, and a power consumption module 240.

The impedance module 220 is an electrical module with an adjustable impedance. The impedance module 220 includes a first end and a second end. The first end of the impedance module 220 is connected to the first battery 212, and the second end of the impedance module 220 is connected to a first end a of the charging and discharging chip 230. In this way, a voltage outputted by the first battery 212 to the first end a of the charging and discharging chip 230 through the impedance module 220 may be adjusted by adjusting the impedance of the impedance module 220. In some specific embodiments, the impedance module 220 may include a transistor, and the impedance of the impedance module 220 may be adjusted by adjusting a turn-on degree of the transistor. In some other specific embodiments, the impedance module 220 may alternatively include an adjustable resistor, and the impedance of the impedance module 220 may be adjusted by adjusting a resistance of the adjustable resistor.

The power consumption module 240 may include one or more electronic components. Both the first electronic component 252 and the second electronic component 254 are electronic components independent of the power consumption module 240. As described above, the electronic component is a component to which electric energy needs to be inputted in the electronic device during operation. In other words, during operation of the electronic device, the first battery 212 and/or the second battery 214 need/needs to supply power to the first electronic component 252, the second electronic component 254, and the electronic components in the power consumption module 240. Details are not described herein again.

Both the first electronic component 252 and the second electronic component 254 are electronic components that generate a large peak current during operation. A first threshold may be defined. The first threshold is a current threshold used for determining whether a peak current generated by the electronic component during operation is large. When the peak current of the electronic component is greater than or equal to the first threshold, it is determined that the electronic component generates a large peak current during operation. The first threshold may be set by a person skilled in the art according to requirements and experience. For example, in some specific embodiments, the first threshold may be, for example, 2.5 A, 3 A, or 3.5 A. In other words, a peak current generated by the first electronic component 252 during operation is greater than or equal to the first threshold, and a peak current generated by the second electronic component 254 during operation is also greater than or equal to the first threshold. In a preferred embodiment, the first threshold is 3 A.

The peak current is a difference between a maximum current value and an average current value that are generated by the electronic component during operation. For example, FIG. 8 is a current curve diagram of an electronic component during operation according to an embodiment of this application, where a vertical coordinate I represents a current, and a horizontal coordinate T represents time. As shown in FIG. 8, a straight line (1) represents the average current value of the electronic component during operation. In other words, the average current value of the electronic component during operation is I1. A curve (2) is a current curve of the electronic component during operation. It can be seen that the maximum current value generated by the electronic component during operation is I2. Based on this, the peak current generated by the electronic component during operation is equal to a difference between I2 and I1, i.e., ΔI. When ΔI is greater than or equal to the first threshold, it indicates that the electronic component generates a large peak current during operation.

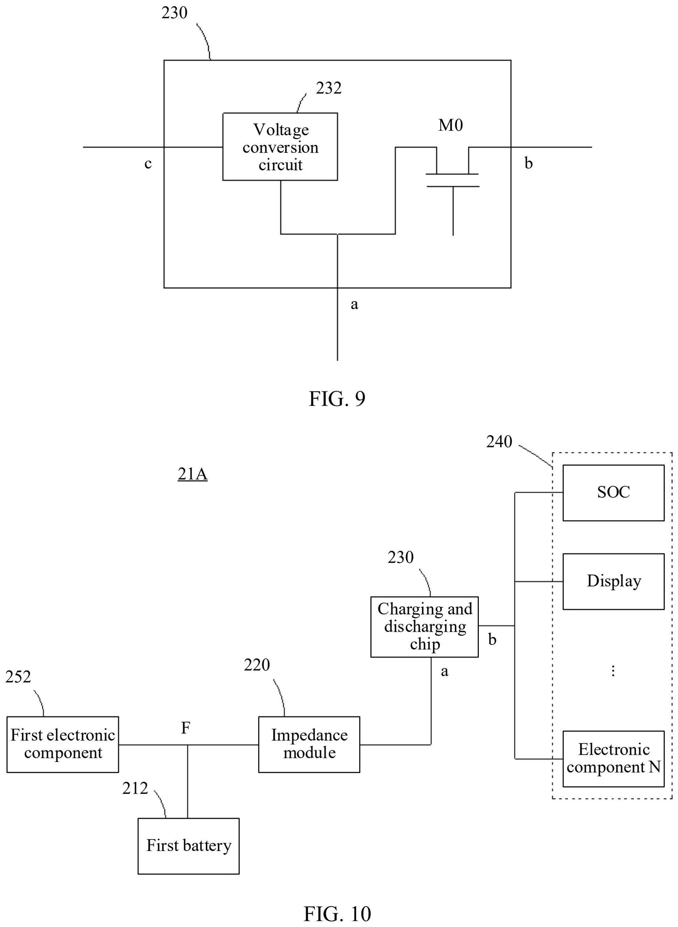

The charging and discharging chip 230 includes the first end a and a second end b. As described above, the first end a of the charging and discharging chip 230 is connected to the first battery 212 by the impedance module 220. The first end a of the charging and discharging chip 230 is further connected to the second battery 214. The second end b of the charging and discharging chip 230 is configured to connect to the power consumption module 240. FIG. 9 is a schematic diagram of an internal structure of the charging and discharging chip 230 according to an embodiment of this application. As shown in FIG. 9, the charging and discharging chip 230 further includes a third end c, and the third end c of the charging and discharging chip 230 is configured to connect to a charger. Generally, a voltage conversion circuit 232 may be connected between the first end a and the third end c of the charging and discharging chip 230. The voltage conversion circuit 232 is a direct current BOOST (boost conversion) circuit and/or a direct current BUCK (buck conversion) circuit, and is configured to implement boost or buck of a direct current. A transistor M0 may be connected between the first end a and the second end b of the charging and discharging chip 230. In a case that the transistor M0 is turned on, if the third end c of the charging and discharging chip 230 is connected to the charger, a path is formed in the charging and discharging chip 230 from the third end c of the charging and discharging chip 230 to the second end b of the charging and discharging chip 230 through the voltage conversion circuit 232 and the transistor M0, and the path can supply power to the electronic components in the power consumption module 240. In addition, the charging and discharging chip 230 further forms a path from the third end c of the charging and discharging chip 230 to the first end a of the charging and discharging chip 230 through the voltage conversion circuit 232. The path may charge the first battery 212 and the second battery 214. In a case that the transistor M0 is turned on, if the third end c of the charging and discharging chip 230 is not connected to the charger, a path is formed in the charging and discharging chip 230 from the first end a of the charging and discharging chip 230 to the second end b of the charging and discharging chip 230 through the transistor M0. In this case, the first battery 212 and the second battery 214 may supply power to the electronic components in the power consumption module 240 through the path formed in the charging and discharging chip 230.

In this embodiment of this application, a manner in which the first electronic component 252 and the second electronic component 254 are connected to batteries (including the first battery 212 and the second battery 214) is different from a manner in which the electronic components in the power consumption module 240 are connected to the batteries. Specifically, as shown in FIG. 7, the first electronic component 252 is directly connected to the first battery 212. In other words, the first electronic component 252, the first battery 212, and the first end of the impedance module 220 are connected to a same node, to enable the first battery 212 to separately supply power to the first electronic component 252. Similarly, the second electronic component 254 is directly connected to the second battery 214, to enable the second battery 214 to separately supply power to the second electronic component 254.

In the power supply circuit 21, the first electronic component 252 and the second electronic component 254 are electronic components that generate a large peak current during operation. Instead of being connected to the first battery 212 by the charging and discharging chip 230 and the impedance module 220, the first electronic component 252 is independent of the power consumption module 240 and directly connected to the first battery 212, so that an impedance between the first electronic component 252 and the first battery 212 can be reduced, thereby reducing a voltage drop formed when the first electronic component 252 generates a peak current during operation. Similarly, the second electronic component 254 is independent of the power consumption module 240 and directly connected to the second battery 214, so that a voltage drop formed when the second electronic component 254 generates a peak current during operation can also be reduced. Triggering of the UVLO of an electronic device can be avoided by reducing a voltage drop formed when an electronic component generates a peak current during operation, thereby improving operating stability of the electronic device.

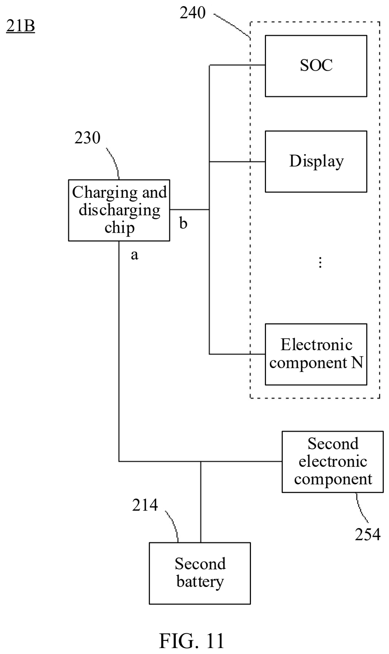

For example, the power supply circuit 21 shown in FIG. 7 may be split into a first power supply subcircuit 21A and a second power supply subcircuit 21B. FIG. 10 is a circuit structure diagram of the first power supply subcircuit 21A according to an embodiment of this application. As shown in FIG. 10, the first power supply subcircuit 21A is a part in the power supply circuit 21 in which the first battery 212 supplies power to the power consumption module 240 through the impedance module 220 and the charging and discharging chip 230 and a part in the power supply circuit 21 in which the first battery 212 supplies power to the first electronic component 252. FIG. 11 is a circuit structure diagram of the second power supply subcircuit 21B according to an embodiment of this application. As shown in FIG. 11, the second power supply subcircuit 21B is a part in the power supply circuit 21 in which the second battery 214 supplies power to the power consumption module 240 through the charging and discharging chip 230 and a part in the power supply circuit 21 in which the second battery 214 supplies power to the second electronic component 254.

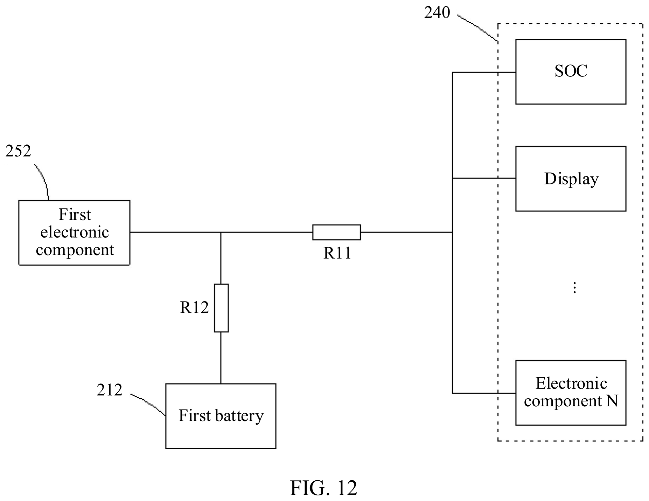

In the embodiment shown in FIG. 10, the power consumption module 240 includes an SOC, a display, and other electronic components. The node to which the first electronic component 252, the first battery 212, and the first end of the impedance module 220 are connected is referred to as a node F. An equivalent circuit diagram of the first power supply subcircuit 21A shown in FIG. 10 may be shown in FIG. 12, where a resistor R12 is an equivalent resistor of a connecting lead wire from the first battery 212 to the node F; and a resistor R11 is an equivalent resistor from the node F to the second end b of the charging and discharging chip 230, and a value of the resistor R11 is equal to a sum of an impedance of a lead wire from the node F to the second end b of the charging and discharging chip 230, an impedance of the impedance module 220, and an impedance of the charging and discharging chip 230.

An input voltage of the SOC is equal to a voltage of the second end b of the charging and discharging chip 230. In this case, the input voltage of the SOC is:

$$VPH = VBAT - I_1 \times R_{12} - I_{11} \times R_{11}$$
$$I_1 = I_{11} + I_{12}$$

.

*VPH* is the input voltage of the SOC, *VBAT* is a voltage of the first battery 212, $I_1$ is a total current outputted by the first battery 212, $R_{12}$ is an impedance of the resistor R12, $I_{11}$ is a current outputted by the first battery 212 to the power consumption module 240, $R_{11}$ is an impedance of the resistor R11, and $I_{12}$ is a current outputted by the first battery 212 to the first electronic component 252.

It can be seen that when the first electronic component 252 generates a large peak current during operation, i.e., when the current $I_{12}$ outputted by the first battery 212 to the first electronic component 252 generates a peak value, the total current $I_1$ outputted by the first battery 212 generates a peak value, but does not affect the current $I_{11}$ outputted by the first battery 212 to the power consumption module 240. Since the resistor R12 is only an equivalent resistor of the lead wire, i.e., the impedance $R_{12}$ of the resistor R12 is small, the peak value generated by the total current $I_1$ outputted by the first battery 212 has little impact on the input voltage *VPH* of the SOC.

For example, during operation of the electronic device in which the power supply circuit 21 is used, a maximum voltage of the first battery 212 is 4.45 V, and a minimum voltage of the first battery 212 is 2.8 V. A lower power level of the first battery 212 indicates a lower voltage. A rated voltage of the SOC is generally 2.7 V, and a UVLO voltage of the SOC is generally 2.35 V. When the current $I_{12}$ outputted by the first battery 212 to the first electronic component 252 is 5 A, the current $I_{11}$ outputted by the first battery 212 to the power consumption module 240 is 2 A, the impedance $R_{12}$ of the resistor R12 is 1mΩ, and the impedance $R_{11}$ of the resistor R11 is 100 mΩ. If the voltage of the first battery 212 is 3 V in this case, it can be learned from the foregoing formula that the input voltage of the SOC is 2.793 V, which is higher than the rated voltage of the SOC and much greater than the UVLO voltage of the SOC. In this way, triggering of the undervoltage lockout mechanism of the electronic device can be avoided while a power supply requirement of the first electronic component 252 is met, thereby improving the operating stability of the electronic device. In other words, since the current $I_{12}$ outputted by the first battery 212 to the first electronic component 252 does not need to flow through the impedance module 220 and the charging and discharging chip 230, a large voltage drop in the power supply circuit 21 can be avoided, thereby improving the operating stability of the electronic device. The same effect can also be generated in the second power supply subcircuit 21B, and details are not described again.

The power supply circuit 21 provided in embodiments of this application further has the following beneficial effects: The first battery 212 and the second battery 214 jointly supply power to the power consumption module 240 through the charging and discharging chip 230. Compared with that the charging and discharging chip 230 in either of the first battery 212 and the second battery 214 supplies power to the power consumption module 240, operating duration of the power consumption module 240 can be increased, thereby ensuring endurance of the electronic device in which the power supply circuit 21 is used. A lower power level indicates a lower voltage. Therefore, both the first battery 212 and the second battery 214 are directly connected to the electronic component. Compared with that only one of the first battery 212 and the second battery 214 is connected to the electronic component, this is more conducive to keeping a voltage difference between the two batteries small, thereby improving the operating stability of the electronic device.

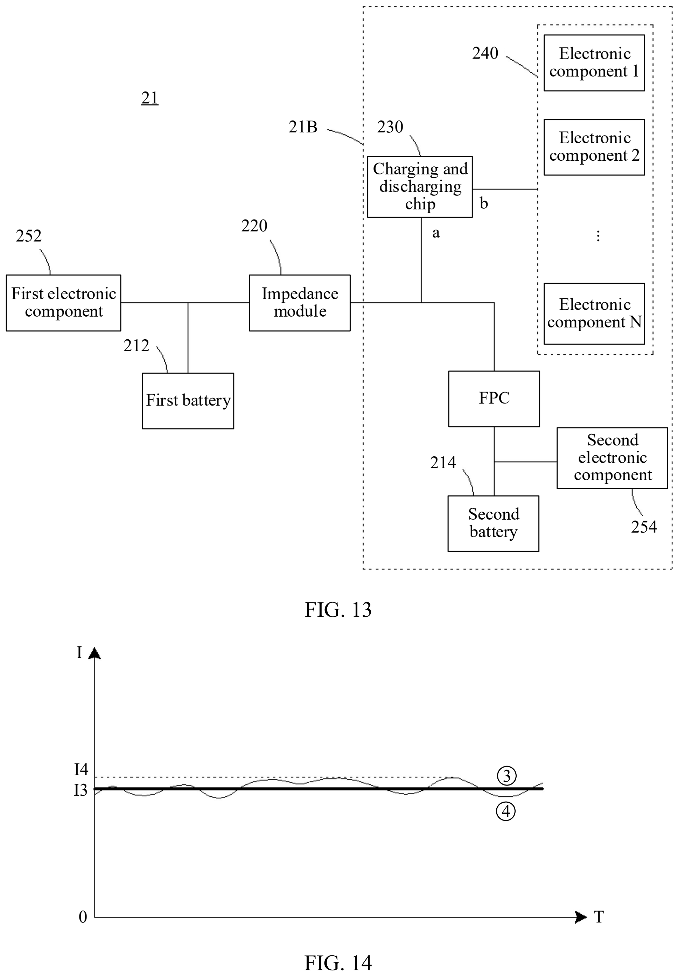

In some embodiments, as described above, when the power supply circuit 21 is used in the electronic device such as a foldable-screen mobile phone, the electronic device further includes an FPC. In this case, a circuit structure of the power supply circuit 21 may be shown in FIG. 13. Specifically, in the second power supply subcircuit 21B, the second battery 214, the second electronic component 254, and a first end of the FPC are connected together, and a second end of the FPC is configured to connect to the first end a of the charging and discharging chip 230. In this way, the current outputted by the second battery 214 to the second electronic component 254 does not need to flow through the FPC with a large impedance, so that a large voltage drop in the power supply circuit 21 can be avoided, thereby improving the operating stability of the electronic device.

A difference between the first electronic component 252 and the second electronic component 254 and the electronic components in the power consumption module 240 is described in detail below.

Both the first electronic component 252 and the second electronic component 254 may be electronic components with a large peak current and a small average current. The peak current is a difference between a maximum current value and an average current value that are generated by the electronic component during operation, and a large peak current means that the peak current of the electronic component is greater than or equal to the first threshold. Details are not described again.

The average current is an average current value generated by the electronic components during operation. A second threshold may be further defined. The second threshold is a current threshold used for determining whether the average current generated by the electronic component during operation is small. When the average current of the electronic device is less than or equal to the second threshold, it is determined that the electronic device generates a small average current during operation. The second threshold may be set by a person skilled in the art according to requirements and experience. For example, the second threshold may be, for example, 0.8 A, 1 A, or 1.2 A. In other words, an average current value generated by the first electronic component 252 during operation is less than or equal to the second threshold, and an average current value generated by the second electronic component 254 during operation is also less than or equal to the second threshold. In a preferred embodiment, the second threshold is 1 A. In some embodiments, a current curve diagram of an electronic component with a large peak current and a small average current during operation may be shown in FIG. 8. In some specific embodiments, the first electronic component 252 and the second electronic component 254 may be radio frequency power amplifiers in a communication module (including a mobile communication module and a wireless communication module), or may be LNAs in a communication module, or may be audio power amplifiers in an audio module.

Any one of the plurality of electronic components in the power consumption module 240 is an electronic component with a small peak current and a large average current.

A third threshold may be defined. The third threshold is a current threshold used for determining whether the peak current generated by the electronic component during operation is small. When the peak current of the electronic component is less than the third threshold, it is determined that the electronic component generates a small peak current during operation. The third threshold is less than or equal to the first threshold, and the third threshold may be set by a person skilled in the art according to requirements and experience. For example, in some specific embodiments, when the first threshold is 3 A, the third threshold may be 0.5 A, 1 A, 2 A, or 3 A. In a preferred embodiment, the third threshold is 0.5 A. In other words, a peak current of any one of the plurality of electronic components of the power consumption module 240 is less than the third threshold. In this case,

the peak current of any electronic component in the power consumption module 240 is less than the third threshold, the third threshold is less than or equal to the first threshold, and the first threshold is less than or equal to the peak current of the first electronic component 252; and the peak current of any electronic component in the power consumption module 240 is less than the third threshold, the third threshold is less than or equal to the first threshold, and the first threshold is less than or equal to the peak current of the second electronic component 254.

It can be seen that the peak current of any electronic component in the power consumption module 240 is definitely less than the first threshold. The large peak currents of the first electronic component 252 and the second electronic component 254 are relative to any electronic component in the power consumption module 240.

A fourth threshold may be defined. The fourth threshold is a current threshold used for determining whether an average current generated by the electronic component during operation is large. When the average current of the electronic component is greater than the fourth threshold, it is determined that the electronic component generates a large average current during operation. The fourth threshold is greater than or equal to the second threshold, and the fourth threshold may be set by a person skilled in the art according to requirements and experience. For example, in some specific embodiments, when the second threshold is 1 A, the fourth threshold may be, for example, 1 A, 2 A, or 3 A. In a preferred embodiment, the fourth threshold is 3 A. In other words, an average current of any one of the plurality of electronic components of the power consumption module 240 is greater than the fourth threshold. In this case, an average current of the first electronic component 252 is less than or equal to the second threshold, the second threshold is less than or equal to the fourth threshold, and the fourth threshold is less than the average current of any electronic component in the power consumption module 240; and an average current of the second electronic component 254 is less than or equal to the second threshold, the second threshold is less than or equal to the fourth threshold, and the fourth threshold is less than the average current of any electronic component in the power consumption module 240.

It can be seen that the average current of any electronic component in the power consumption module 240 is definitely greater than the second threshold. The small average currents of the first electronic component 252 and the second electronic component 254 are relative to any electronic component in the power consumption module 240.

In some embodiments, a current curve diagram of an electronic component with a small peak current and a large average current during operation may be shown in FIG. 14. A straight line (3) represents an average current value of the electronic component during operation. In other words, the average current value of the electronic component during operation is I3. A curve (4) is a current curve of the electronic component during operation. It can be seen that a maximum current value generated by the electronic component during operation is I4, and a difference between I4 and I3 is less than the third threshold. In some specific embodiments, the electronic components in the power consumption module 240 include a PMIC, a display, an SOC, and the like.

In this embodiment, when the plurality of electronic components in the power consumption module 240 are all electronic components with small peak currents and large average currents, the power supply circuit 21 further has the following beneficial effects: Based on the small peak currents of the plurality of electronic components in the power consumption module 240, triggering of the undervoltage lockout mechanism of the electronic device due to the peak currents generated by the electronic components can be avoided, thereby improving operating stability of the electronic device. In addition, based on the large average currents of the plurality of electronic components in the power consumption module 240, the first battery 212 and the second battery 214 jointly supply power to the electronic components through the charging and discharging chip 230, so that operating duration of the electronic components can be increased, thereby ensuring the endurance of the electronic device in which the power supply circuit 21 is used.

The power supply circuit 21 provided in embodiments of this application is further expanded below.

In some embodiments, affected by a form of the foldable-screen mobile phone, a size of the first battery 212 may be different from a size of the second battery 214. In this case, the rated capacity of the first battery 212 is also different from the rated capacity of the second battery 214. Based on this, a connection manner of the electronic components with a large peak current and a small average current may be set according to the rated capacity of the first battery 212 and the rated capacity of the second battery 214. This is explained in detail below with two possible cases.

> 1. In a first possible case, the first battery 212 and the second battery 214 are each directly connected to an electronic component with a large peak current and a small average current.

Specifically, when the first battery 212 and the second battery 214 are each connected to the electronic component with a large peak current and a small average current, to keep a voltage difference between the two batteries as small as possible, an electronic component in the first electronic component 252 and the second electronic component 254 that consumes more electric energy can be connected to a battery in the first battery 212 and the second battery 214 that has a larger rated capacity, and an electronic component in the first electronic component 252 and the second electronic component 254 that consumes less electric energy can be connected to a battery in the first battery 212 and the second battery 214 that has a smaller rated capacity. For example, still as shown in FIG. 7 or FIG. 13, the first battery 212 is directly connected to the first electronic component 252, and the second battery 214 is directly connected to the second electronic component 254. In this case, if the rated capacity of the first battery 212 is greater than the rated capacity of the second battery 214, the first electronic component 252 may be one of two electronic components (i.e., the first electronic component 252 and the second electronic component 254) that consumes more electric energy, and the second electronic component 254 is one of the two electronic components that consumes less electric energy.

In some specific embodiments, an amount of electric energy consumed by the electronic component may be determined according to power consumption of the electronic component within preset duration when a user normally uses the electronic device. The preset duration may be set by a person skilled in the art according to experience or requirements. For example, the preset duration may be one day, three days, seven days, or the like. If power consumption of the first electronic component 252 within the preset duration is greater than power consumption of the second electronic component 254 within the preset duration, it is determined that the first electronic component 252 is the electronic component that consumes more electric energy in the two electronic components, and the second electronic component 254 is the electronic component that consumes less electric energy in the two electronic components.

In some other specific embodiments, the amount of electric energy consumed by the electronic component may be determined according to an average current of the electronic component. For example, in a possible embodiment, if the average current of the first electronic component 252 is greater than the average current of the second electronic component 254, it is determined that the first electronic component 252 is the electronic component that consumes more electric energy in the two electronic components, and the second electronic component 254 is the electronic component that consumes less electric energy in the two electronic components. In other words, in a case that the average currents are not equal, an amount of electric energy consumed by the electronic component during operation may be determined according to a magnitude of the average current generated by the electronic component during operation.

2. In a second possible case, at least one of the first battery 212 and the second battery 214 may be directly connected to a plurality of electronic components with a large peak current and a small average current. "Plurality of" refers to an integer greater than or equal to two.

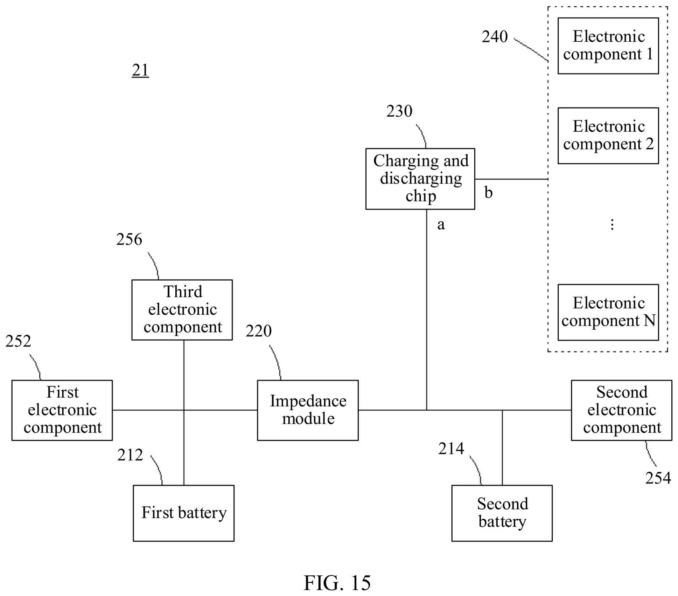

Specifically, when at least one of the first battery 212 and the second battery 214 is directly connected to the plurality of electronic components, to keep the voltage difference between the two batteries as small as possible, an electronic component connected to a battery having a larger rated capacity may consume more electric energy, and an electronic component connected to a battery having a smaller rated capacity consumes less electric energy. For example, as shown in FIG. 15, the first battery 212 is directly connected to the first electronic component 252 and a third electronic component 256, and the second battery 214 is directly connected to the second electronic component 254. In this case, if the rated capacity of the first battery 212 is greater than the rated capacity of the second battery 214, a sum of electric energy consumed by the first electronic component 252 and electric energy consumed by the third electronic component 256 may be greater than electric energy consumed by the second electronic component 254.

In some specific embodiments, the power consumption of the electronic component may be determined according to power consumption of the electronic component within the preset duration when the user normally uses the electronic device. If a sum of the power consumption of the first electronic component 252 within the preset duration and power consumption of the third electronic component 256 within the preset duration is greater than the power consumption of the second electronic component 254 within the preset duration, it is determined that the sum of the electric energy consumed by the first electronic component 252 and the electric energy consumed by the third electronic component 256 is greater than the electric energy consumed by the second electronic component 254.

In some other specific embodiments, the amount of electric energy consumed by the electronic component may be determined according to an average current of the electronic component. For example, in a possible embodiment, if a sum of an average current of the first electronic component 252 and an average current of the third electronic component 256 is greater than an average current of the second electronic component 254, it is determined that the sum of the electric energy consumed by the first electronic component 252 and the electric energy consumed by the third electronic component 256 is greater than the electric energy consumed by the second electronic component 254.

It may be understood that, in an embodiment shown in FIG. 15, the power supply circuit 21 provided in this embodiment of this application is described only by using an example in which the first battery 212 is directly connected to a plurality of electronic components and the second battery 214 is directly connected to one electronic component. In some other embodiments, the first battery 212 may be directly connected to one electronic component, and the second battery 214 may be directly connected to a plurality of electronic components. An electronic component connected to a battery with a large rated capacity consumes more electric energy, and an electronic component connected to a battery with a small rated capacity consumes less electric energy. In some other embodiments, both the first battery 212 and the second battery 214 may be directly connected to a plurality of electronic components. Details are not described again.

Two specific implementations of the impedance module 220 are described in detail below.

1. In a first possible implementation, the impedance module 220 includes an impedance conversion unit 222 and a controller 224.

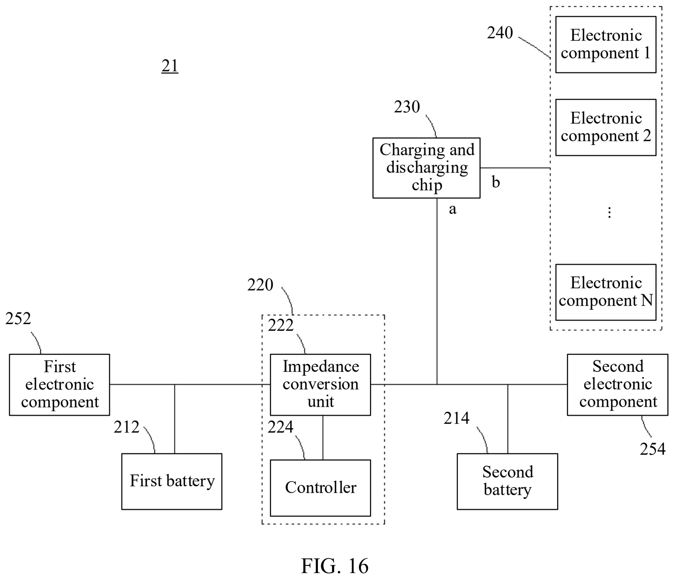

FIG. 16 is a circuit structure diagram of another power supply circuit 21 according to an embodiment of this application. As shown in FIG. 16, the impedance module 220 may include the impedance conversion unit 222 and the controller 224. The impedance conversion unit 222 includes a first end and a second end. The first end of the impedance conversion unit 222 is connected to the first battery 212 and the first electronic component 252, and the second end of the impedance conversion unit 222 is connected to the first end a of the charging and discharging chip 230, the second battery 214, and the second electronic component 254. A control end of the impedance conversion unit 222 is connected to the controller 224, so that the controller 224 may adjust an impedance of the impedance conversion unit 222, i.e., adjust an impedance between the first battery 212 and the first end a of the charging and discharging chip 230.

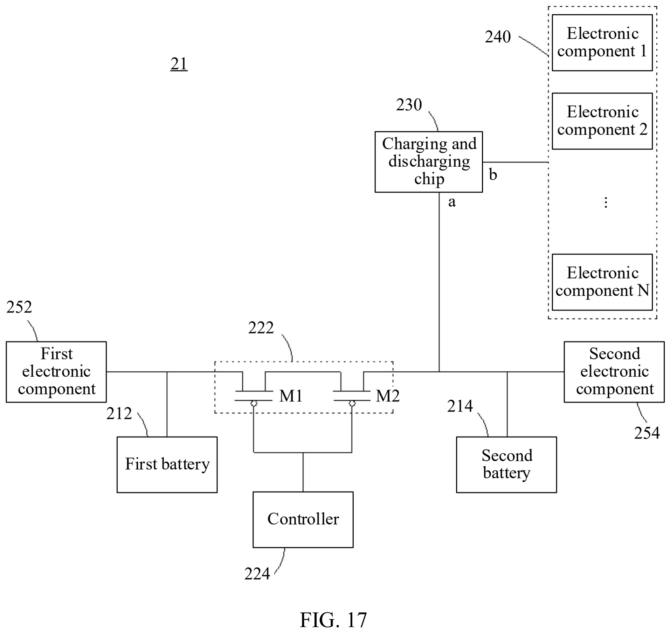

FIG. 17 is a circuit diagram of the power supply circuit 21 according to an embodiment of this application. As shown in FIG. 17, the impedance conversion unit 222 may include a first transistor M1 and a second transistor M2. A first end of the first transistor M1 is connected to the first battery 212 and the first electronic component 252. A second end of the first transistor M1 is connected to a first end of the second transistor M2, and a second end of the second transistor M2 is connected to the first end a of the charging and discharging chip 230, the second battery 214, and the second electronic component 254. In the embodiment shown in FIG. 17, the first transistor M1 and the second transistor M2 are P-type transistors, for example, P-type metal oxide semiconductor field effect transistors (metal oxide semiconductor field effect transistors, MOSFETs). In some other embodiments that are not shown, the first transistor M1 and the second transistor M2 may alternatively be N-type transistors.

In this embodiment, the controller 224 is connected to a control end of the first transistor M1 and a control end of the second transistor M2. The controller 224 may control voltages of the control end of the first transistor M1 and the control end of the second transistor M2 by outputting an analog signal, to control turn-on degrees of the first transistor M1 and the second transistor M2, i.e., control the impedance of the impedance conversion unit 222 formed by the first transistor M1 and the second transistor M2. For example, when both the first transistor M1 and the second transistor M2 are P-type transistors, the controller 224 may increase the voltages of the control end of the first transistor M1 and the control end of the second transistor M2, to increase the impedance of the impedance conversion unit 222. The impedance of the impedance conversion unit 222 may alternatively be reduced by reducing the voltages of the control end of the first transistor M1 and the control end of the second transistor M2.

2. In a second possible implementation, the impedance module 220 includes an impedance conversion unit 222, an impedance control unit 226, a filter unit 228, and a controller 224.

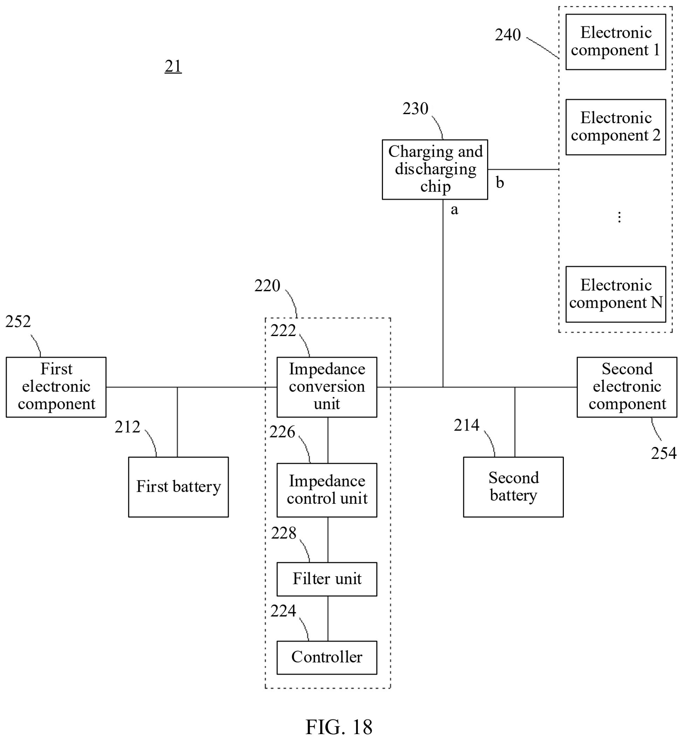

FIG. 18 is a circuit structure diagram of another power supply circuit 21 according to an embodiment of this application. As shown in FIG. 18, the impedance module 220 may include the impedance conversion unit 222, the impedance control unit 226, the filter unit 228, and the controller 224. The filter unit 228 includes an input end and an output end. The input end of the filter unit 228 is connected to the controller 224. The output end of the filter unit 228 is connected to an input end of the impedance control unit 226. An output end of the impedance control unit 226 is connected to a control end of the impedance conversion unit 222. The impedance conversion unit 222 further includes a first end and a second end. The first end of the impedance conversion unit 222 is connected to the first battery 212 and the first electronic component 252, and the second end of the impedance conversion unit 222 is connected to the first end a of the charging and discharging chip 230, the second battery 214, and the second electronic component 254. In this way, an impedance between the first battery 212 and the first end a of the charging and discharging chip 230 can be adjusted by adjusting an impedance of the impedance conversion unit 222.

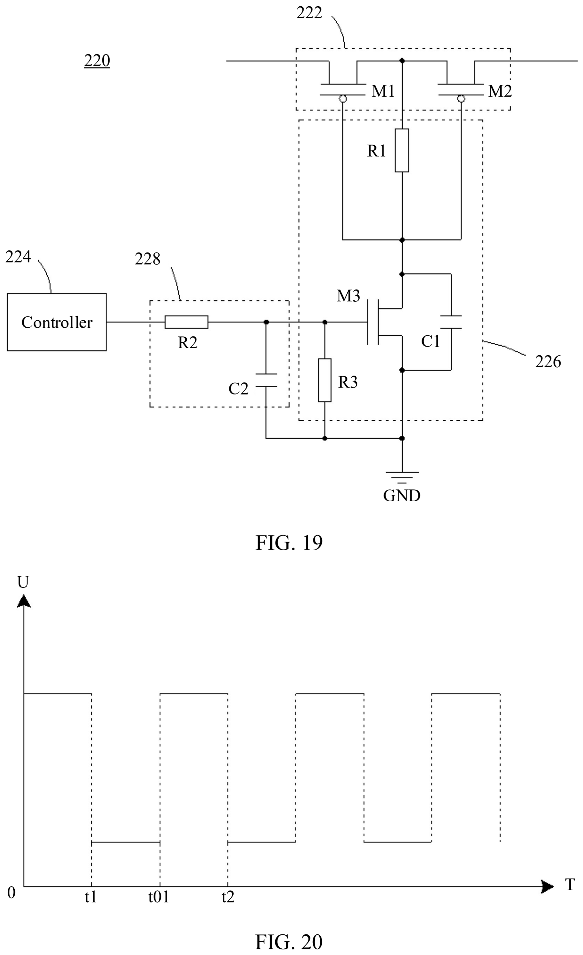

Specifically, FIG. 19 is a circuit diagram of the impedance module 220 according to an embodiment of this application. As shown in FIG. 19, the impedance conversion unit 222 includes a first transistor M1 and a second transistor M2; and the impedance control unit 226 includes a first resistor R1, a third transistor M3, a first capacitor C1, and a third resistor R3. The filter unit 228 includes a second resistor R2 and a second capacitor C2.

A first end of the first transistor M1 is connected to the first battery 212 and the first electronic component 252. A second end of the first transistor M1 is connected to a first end of the second transistor M2, and a second end of the second transistor M2 is connected to the first end a of the charging and discharging chip 230, the second battery 214, and the second electronic component 254.

A first end of the first resistor R1 is connected to the second end of the first transistor M1 and the first end of the second transistor M2. A second end of the first resistor R1 is connected to a first end of the third transistor M3. A second end of the third transistor M3 is connected to a ground cable GND. The first capacitor C1 is a parasitic capacitor of the third transistor M3. A first plate of the first capacitor C1 is connected to the first end of the third transistor M3, and a second plate of the first capacitor C1 is connected to the second end of the third transistor M3. A first end of the third resistor R3 is connected to a control end of the third transistor M3, and a second end of the third resistor R3 is connected to the second end of the third transistor M3. In this embodiment of this application, the third transistor M3 may be an N-type transistor, for example, an N-type MOSFET. The third resistor R3 is a pull-down resistor of the third transistor M3.

A first end of the second resistor R2 is connected to the controller 224, and a second end of the second resistor R2 is connected to the control end of the third transistor M3. A first plate of the second capacitor C2 is connected to the control end of the third transistor M3, and a second plate of the second capacitor C2 is connected to the second end of the third transistor M3. In other words, the filter unit 228 is an RC filter circuit formed by the second resistor R2 and the second capacitor C2.

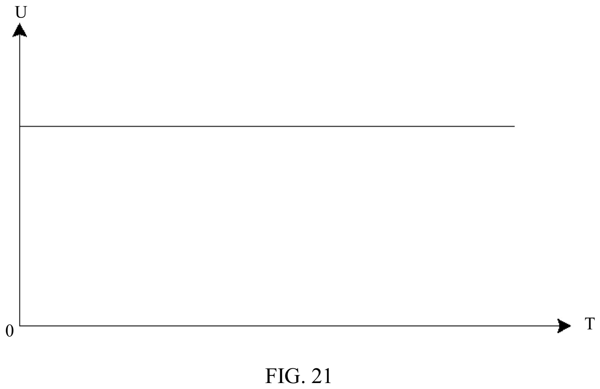

During operation of the power supply circuit 21, the controller 224 may output a pulse width modulation (pulse width modulation, PWM) signal to the filter unit 228. The PWM signal is a square wave signal formed by a high-level signal and a low-level signal, and a waveform of the PWM signal may be shown in FIG. 20, where a vertical coordinate U represents a voltage, and a horizontal coordinate T represents time. After the PWM signal is inputted, the filter unit 228 may filter the PWM signal, and output a signal to the control end of the third transistor M3. A waveform of an output signal of the filter unit 228 is shown in FIG. 21. In this embodiment, a voltage of the output signal of the filter unit 228 may be adjusted by adjusting a duty cycle of the PWM signal. The duty cycle of the PWM signal is a percentage of duration of a high-level signal in one cycle of the PWM signal in total duration of the cycle. One cycle of the PWM signal includes a high-level signal and a low-level signal that are adjacent. For example, in an embodiment shown in FIG. 20, one cycle of the PWM signal starts from a moment t1 and ends at a moment t2. The duty cycle of the PWM signal is a percentage of duration from a moment t01 to the moment t2 in duration from the moment t1 to the moment t2. A larger duty cycle of the PWM signal indicates a higher voltage of the output signal of the filter unit 228. Conversely, a smaller duty cycle of the PWM signal indicates a lower voltage of the output signal of the filter unit 228.

When the controller 224 outputs the PWM signal, a frequency of the PWM signal is the same as an operating frequency of the filter unit 228. The operating frequency of the filter unit 228 is: $f = \dfrac{1}{2\pi RC}$. $R$ is a resistance value of the second resistor R2, and $c$ is a capacitance value of the second capacitor C2. The frequency of the PWM signal is a quantity of cycles of the PWM signal in one second.

The first resistor R1 and the third transistor M3 are connected in series to form a voltage division circuit. Since the third transistor M3 is an N-type transistor, when the voltage of the output signal of the filter unit 228 is higher, i.e., when the voltage of the control end of the third transistor M3 is higher, the turn-on degree of the third transistor M3 is larger, i.e., the impedance of the third transistor M3 is smaller. When the impedance of the third transistor M3 is smaller, the voltage of a node to which the first end of the third transistor M3 and the second end of the first resistor R1 are connected is lower, i.e., the voltages of the control ends of the first transistor M1 and the second transistor M2 are lower. Since the first transistor M1 and the second transistor M2 are P-type transistors, when the voltages of the control ends of the first transistor M1 and the second transistor M2 are lower, the turn-on degrees of the first transistor M1 and the second transistor M2 are larger, and the impedances of the first transistor M1 and the second transistor M2 are smaller.

Similarly, when the voltage of the output signal of the filter unit 228 is lower, i.e., when the voltage of the control end of the third transistor M3 is lower, the turn-on degree of the third transistor M3 is smaller, i.e., the impedance of the third transistor M3 is larger. When the impedance of the third transistor M3 is larger, the voltage of a node to which the first end of the third transistor M3 and the second end of the first resistor R1 are connected is higher, i.e., the voltages of the control ends of the first transistor M1 and the second transistor M2 are higher. Since the first transistor M1 and the second transistor M2 are P-type transistors, when the voltages of the control ends of the first transistor M1 and the second transistor M2 are higher, the turn-on degrees of the first transistor M1 and the second transistor M2 are smaller, and the impedances of the first transistor M1 and the second transistor M2 are larger.

Therefore, the PWM signal outputted by the controller 224 may control the impedance of the impedance conversion unit 222 formed by the first transistor M1 and the second transistor M2. When the duty cycle of the PWM signal is larger, the impedance of the impedance conversion unit 222 formed by the first transistor M1 and the second transistor M2 is smaller, i.e., the impedance between the first battery 212 and the first end a of the charging and discharging chip 230 is smaller. When the duty cycle of the PWM signal is smaller, the impedance of the impedance conversion unit 222 formed by the first transistor M1 and the second transistor M2 is larger, i.e., the impedance between the first battery 212 and the first end a of the charging and discharging chip 230. In this process, the frequency of the PWM signal remains unchanged.

It may be understood that, when the first battery 212 outputs electric energy to the first end a of the charging and discharging chip 230 through the impedance module 220, in a case that the voltage of the first battery 212 remains unchanged, when the impedance of the impedance module 220 is larger, the voltage of the first battery 212 outputted to the first end a of the charging and discharging chip 230 through the impedance module 220 is lower. When the impedance of the impedance module 220 is smaller, the voltage outputted by the first battery 212 to the first end a of the charging and discharging chip 230 through the impedance module 220 is higher.

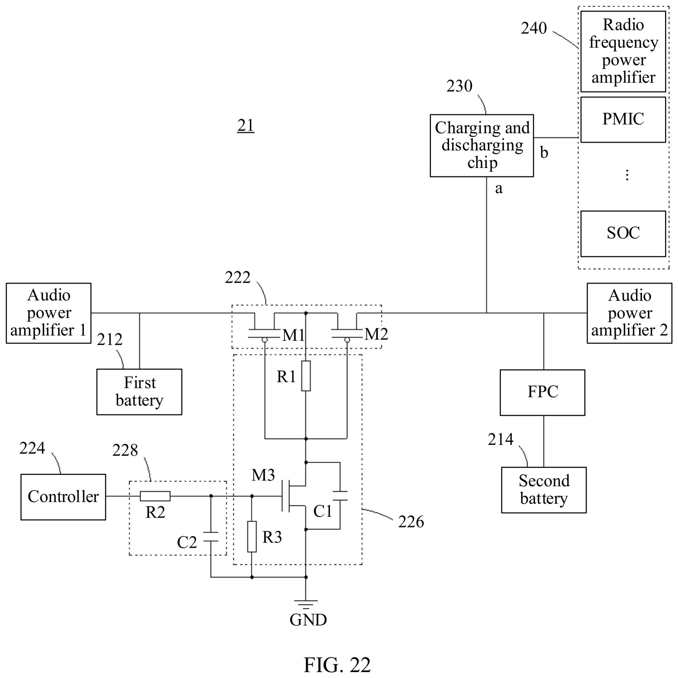

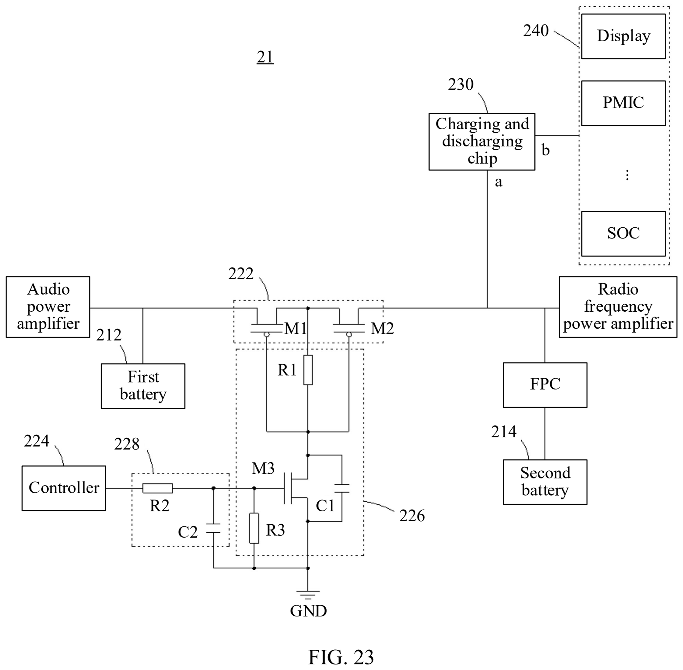

FIG. 22 and FIG. 23 are two different circuit diagrams of a power supply circuit according to an embodiment of this application. As shown in FIG. 22, in some specific embodiments, when the electronic device in which the power supply circuit 21 is used includes a plurality of audio power amplifiers, the first electronic component 252 may be an audio power amplifier, and the second electronic component 254 may be another audio power amplifier. In this case, the radio frequency power amplifier and the LNA may be disposed in the power consumption module 240, and the power consumption module may further include a PMIC, an SOC, a display, and the like. As shown in FIG. 23, in some other specific embodiments, when the electronic device in which the power supply circuit 21 is used includes only one audio power amplifier, the first electronic component 252 may be an audio power amplifier, and the second electronic component 254 may be a radio frequency power amplifier. In this case, the power consumption module 240 may include a PMIC, an SOC, a display, and the like. It may be understood that, in embodiments shown in FIG. 22 and FIG. 23, the plurality of electronic components in the power consumption module 240 may be connected in series or in parallel. Using the PMIC and the SOC in the power consumption module 240 as an example, that the PMIC and the SOC are connected in parallel means that the PMIC and the SOC are respectively connected to the second end b of the charging and discharging chip 230; and that the PMIC and the SOC are connected in series may mean that an input end of the PMIC is connected to the second end b of the charging and discharging chip 230, and an output end of the PMIC is connected to the SOC.

Embodiments of this application further provide an electronic device 10, including the power supply circuit 21 in any one of the foregoing embodiments. In some embodiments, the electronic device 10 may be a foldable-screen mobile phone. An appearance of the electronic device 10 may be shown in FIG. 1 and FIG. 2. In other words, the electronic device 10 may include the first structural member 12 and the second structural member 14. The first structural member 12 is movably connected to the second structural member 14. For example, the first structural member 12 may be connected to the second structural member 14 through the hinge 16. The impedance module 220, the first battery 212, and the first electronic component 252 are located on the first structural member 12. The second battery 214 and the second electronic component 254 are located on the second structural member 14. The charging and discharging chip 230 is located in either of the first structural member 12 and the second structural member 14.

In some embodiments, the charging and discharging chip 230 is located on the first structural member 12; and the second battery 214 is connected to the first end a of the charging and discharging chip 230 by the FPC.

The power supply circuit 21 provided in embodiments of this application has at least the following beneficial effects:

The first battery 212 and the second battery 214 jointly supply power to the power consumption module 240 through the charging and discharging chip 230. Compared with that the charging and discharging chip 230 in either of the first battery 212 and the second battery 214 supplies power to the power consumption module 240, the operating duration of the power consumption module 240 can be increased, thereby ensuring endurance of the electronic device 10 in which the power supply circuit 21 is used. The first electronic component 252 and the second electronic component 254 are electronic components that generate a large peak current during operation. Instead of being connected to the first battery 212 by the charging and discharging chip 230 and the impedance module 220, the first electronic component 252 is independent of the power consumption module 240 and directly connected to the first battery 212, so that an impedance between the first electronic component 252 and the first battery 212 can be reduced, thereby reducing a voltage drop formed when the first electronic component 252 generates a peak current during operation. Similarly, the second electronic component 254 is independent of the power consumption module 240 and directly connected to the second battery 214, so that a voltage drop formed when the second electronic component 254 generates a peak current during operation can also be reduced. Triggering of an undervoltage lockout mechanism of the electronic device 10 can be avoided by reducing a voltage drop formed when an electronic component generates a peak current during operation, thereby improving operating stability of the electronic device 10. In addition, both the first battery 212 and the second battery 214 are directly connected to the electronic component. Compared with that only one of the first battery 212 and the second battery 214 is connected to the electronic component, this is more conducive to keeping a voltage difference between the two batteries small, thereby improving the operating stability of the electronic device 10.

In a case that the rated capacity of the first battery 212 is different from the rated capacity of the second battery 214, an electronic component connected to a battery with a large rated capacity consumes more electric energy, and an electronic component connected to a battery with a small rated capacity consumes less electric energy, so that a voltage difference between the two batteries can be kept as small as possible, thereby improving the operating stability of the electronic device 10.

The foregoing embodiments are merely intended for describing the technical solutions but not for limiting this application. Although this application is described in detail with reference to the foregoing embodiments, a person of ordinary skill in the art should understand that, modifications may still be made to the technical solutions described in the foregoing embodiments, or equivalent replacements may be made to some technical features in the technical solutions, as long as such modifications or replacements do not cause the essence of corresponding technical solutions to depart from the spirit and scope of the technical solutions of embodiments of this application, which shall fall within protection scope of this application.

**Claims**

1. A power supply circuit, wherein the power supply circuit comprises an impedance module, a first battery, a first electronic component, a charging and discharging chip, a second battery, a second electronic component, and a power consumption module;

   a first end of the impedance module is connected to the first battery and the first electronic component, a second end of the impedance module is connected to a first end of the charging and discharging chip, the second battery, and the second electronic component, and a second end of the charging and discharging chip is connected to the power consumption module, to enable the first battery to separately supply power to the first electronic component and the second battery to separately supply power to the second electronic component, and the first battery and the second battery supply power to the power consumption module through the charging and discharging chip; and
   a difference between a maximum current value and an average current value of the first electronic component is greater than or equal to a first threshold, and a difference between a maximum current value and an average current value of the second electronic component is greater than or equal to the first threshold.

2. The power supply circuit according to claim 1, wherein the average current value of the first electronic component is less than or equal to a second threshold, and the average current value of the second electronic component is less than or equal to the second threshold.

3. The power supply circuit according to claim 2, wherein the power consumption module comprises a plurality of electronic components, a difference between a maximum current value and an average current value of any one of the plurality of electronic components is less than a third threshold, and the third threshold is less than or equal to the first threshold.

4. The power supply circuit according to claim 3, wherein the average current value of the any electronic component is greater than a fourth threshold, and the fourth threshold is greater than or equal to the second threshold.

5. The power supply circuit according to claim 1, wherein a rated capacity of the first battery is greater than a rated capacity of the second battery, and power consumption of the first electronic component within preset duration is greater than power consumption of the second electronic component within the preset duration.

6. The power supply circuit according to claim 1, wherein a rated capacity of the first battery is greater than a rated capacity of the second battery, and the average current value of the first electronic component is greater than the average current value of the second electronic component.

7. The power supply circuit according to claim 1, wherein the power supply circuit further comprises a third electronic component, and the third electronic component is connected to the first battery; and a rated capacity of the first battery is greater than a rated capacity of the second battery, and a sum of power consumption of the first electronic component within preset duration and power consumption of the third electronic component within the preset duration is greater than power consumption of the second electronic component within the preset duration.

8. The power supply circuit according to any one of claims 1 to 7, wherein the first electronic component is an audio power amplifier or a radio frequency power amplifier, and the second electronic component is an audio power amplifier or a radio frequency power amplifier.

9. The power supply circuit according to any one of claims 1 to 7, wherein the impedance module comprises a first transistor, a second transistor, and a controller;

a first end of the first transistor is connected to the first battery and the first electronic component, a second end of the first transistor is connected to a first end of the second transistor, and a second end of the second transistor is connected to the first end of the charging and discharging chip, the second battery, and the second electronic component; and
the controller is connected to a control end of the first transistor and a control end of the second transistor, and the controller is configured to control voltages of the control end of the first transistor and the control end of the second transistor, to enable a voltage outputted by the first battery to the first end of the charging and discharging chip through the impedance module to be equal to a voltage outputted by the second battery to the first end of the charging and discharging chip.

10. The power supply circuit according to claim 9, wherein the impedance module further comprises a first resistor, a third transistor, a first capacitor, a second resistor, a second capacitor, and a third resistor;

a first end of the first resistor is connected to the second end of the first transistor and the first end of the second transistor, a second end of the first resistor is connected to a first end of the third transistor, the control end of the first transistor, and the control end of the second transistor, and a second end of the third transistor is connected to a ground cable;
a first plate of the first capacitor is connected to the first end of the third transistor, and a second plate of the first capacitor is connected to the second end of the third transistor;
a first end of the second resistor is connected to the controller, and a second end of the second resistor is connected to a control end of the third transistor;
a first plate of the second capacitor is connected to the control end of the third transistor, and a second plate of the second capacitor is connected to the second end of the third transistor; and
a first end of the third resistor is connected to the control end of the third transistor, and a second end of the third resistor is connected to the second end of the third transistor.

11. An electronic device, comprising the power supply circuit according to any one of claims 1 to 10.

12. The electronic device according to claim 11, wherein the electronic device comprises a first structural member and a second structural member;

the first structural member is movably connected to the second structural member, the impedance module, the first battery, and the first electronic component are located on the first structural member, and the second battery and the second electronic component are located on the second structural member; and
the charging and discharging chip is located on either of the first structural member and the second structural member.

13. The electronic device according to claim 12, wherein the charging and discharging chip is located on the first structural member; and the second battery is connected to the first end of the charging and discharging chip by a flexible printed circuit.

14. A power supply circuit, wherein the power supply circuit comprises an impedance module, a first battery, a first electronic component, a charging and discharging chip, a second battery, a second electronic component, and a power consumption module;

a first end of the impedance module is connected to the first battery and the first electronic component, a second end of the impedance module is connected to a first end of the charging and discharging chip, the second battery, and the second electronic component, and a second end of the charging and discharging chip is connected to the power consumption module, to enable the first battery to separately supply power to the first electronic component and the second battery to separately supply power to the second electronic component, and the first battery and the second battery supply power to the power consumption module through the charging and discharging chip;

a difference between a maximum current value and an average current value of the first electronic component is greater than or equal to a first threshold, and a difference between a maximum current value and an average current value of the second electronic component is greater than or equal to the first threshold; and

the power consumption module comprises a plurality of electronic components, an average current value of any one of the plurality of electronic components is greater than the average current value of the first electronic component, and the average current value of the any electronic component is greater than the average current value of the second electronic component.

15. The power supply circuit according to claim 14, wherein the average current value of the first electronic component is less than or equal to a second threshold, and the average current value of the second electronic component is less than or equal to the second threshold.

16. The power supply circuit according to claim 15, wherein a difference between a maximum current value and the average current value of the any electronic component is less than a third threshold, and the third threshold is less than or equal to the first threshold.

17. The power supply circuit according to claim 16, wherein the average current value of the any electronic component is greater than a fourth threshold, and the fourth threshold is greater than or equal to the second threshold.

18. The power supply circuit according to claim 14, wherein a rated capacity of the first battery is greater than a rated capacity of the second battery, and power consumption of the first electronic component within preset duration is greater than power consumption of the second electronic component within the preset duration.

19. The power supply circuit according to claim 14, wherein a rated capacity of the first battery is greater than a rated capacity of the second battery, and the average current value of the first electronic component is greater than the average current value of the second electronic component.

20. The power supply circuit according to claim 14, wherein the power supply circuit further comprises a third electronic component, and the third electronic component is connected to the first battery; and a rated capacity of the first battery is greater than a rated capacity of the second battery, and a sum of power consumption of the first electronic component within preset duration and power consumption of the third electronic component within the preset duration is greater than power consumption of the second electronic component within the preset duration.

21. The power supply circuit according to any one of claims 14 to 20, wherein the first electronic component is an audio power amplifier or a radio frequency power amplifier, and the second electronic component is an audio power amplifier or a radio frequency power amplifier.

22. The power supply circuit according to any one of claims 14 to 20, wherein the impedance module comprises a first transistor, a second transistor, and a controller;

a first end of the first transistor is connected to the first battery and the first electronic component, a second end of the first transistor is connected to a first end of the second transistor, and a second end of the second transistor is connected to the first end of the charging and discharging chip, the second battery, and the second electronic component; and

the controller is connected to a control end of the first transistor and a control end of the second transistor, and the controller is configured to control voltages of the control end of the first transistor and the control end of the second transistor, to enable a voltage outputted by the first battery to the first end of the charging and discharging chip through the impedance module to be equal to a voltage outputted by the second battery to the first end of the charging and discharging chip.

23. The power supply circuit according to claim 22, wherein the impedance module further comprises a first resistor, a third transistor, a first capacitor, a second resistor, a second capacitor, and a third resistor;

a first end of the first resistor is connected to the second end of the first transistor and the first end of the second transistor, a second end of the first resistor is connected to a first end of the third transistor, the control end of the first transistor, and the control end of the second transistor, and a second end of the third transistor is connected to a ground cable;

a first plate of the first capacitor is connected to the first end of the third transistor, and a second plate of the first capacitor is connected to the second end of the third transistor;

a first end of the second resistor is connected to the controller, and a second end of the second resistor is connected to a control end of the third transistor;

a first plate of the second capacitor is connected to the control end of the third transistor, and a second plate of the second capacitor is connected to the second end of the third transistor; and

a first end of the third resistor is connected to the control end of the third transistor, and a second end of the third resistor is connected to the second end of the third transistor.

10

12          14

FIG. 1

FIG. 2

FIG. 3

FIG. 4

FIG. 5

11B

140

130

Charging and discharging chip

SOC

Electronic component A

FPC

114

Second battery

FIG. 6

21

240

Electronic
component 1

230

Electronic
component 2

Charging and
discharging
chip

b

a

⋮

Electronic
component N

252

220

First electronic
component

Impedance
module

Second electronic
component

212

214

254

First battery

Second
battery

FIG. 7

I

I2

②

ΔI

①

I1

0

T

FIG. 8

FIG. 9

FIG. 10

FIG. 11

FIG. 12

21

252 — First electronic component

212 — First battery

220 — Impedance module

21B

230 — Charging and discharging chip — a, b

240 — Electronic component 1, Electronic component 2, ⋮, Electronic component N

FPC

214 — Second battery

254 — Second electronic component

**FIG. 13**

**FIG. 14**

21

240

Electronic component 1

Electronic component 2

230

⋮

Charging and discharging chip

b

Electronic component N

a

256

Third electronic component

220

252

First electronic component

Impedance module

Second electronic component

212

214

254

First battery

Second battery

FIG. 15

21

FIG. 16

FIG. 17

FIG. 18

FIG. 19

FIG. 20

FIG. 21

FIG. 22

FIG. 23

**EP 4 651 336 A1**

## INTERNATIONAL SEARCH REPORT

| | International application No. |
|---|---|
| | **PCT/CN2024/109659** |

**A. CLASSIFICATION OF SUBJECT MATTER**

H02J 7/00(2006.01)i

According to International Patent Classification (IPC) or to both national classification and IPC

**B. FIELDS SEARCHED**

Minimum documentation searched (classification system followed by classification symbols)

IPC: H02J

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 供电, 低电压, 锁定, 阻抗, 压降, 大, 高, 峰值, 电流, battery, power supply, low voltage, lock, UVLO, impedance, voltage drop, high, peak, current

**C. DOCUMENTS CONSIDERED TO BE RELEVANT**

| Category* | Citation of document, with indication, where appropriate, of the relevant passages | Relevant to claim No. |
|---|---|---|
| PX | CN 116995781 A (HONOR DEVICE CO., LTD.) 03 November 2023 (2023-11-03) claims 1-13, description, paragraphs 30-101, and figures 1-23 | 1-23 |
| Y | CN 115001063 A (HONOR DEVICE CO., LTD.) 02 September 2022 (2022-09-02) description, paragraphs 73-173, and figures 1-21 | 1-23 |
| Y | EP 1253696 A1 (TELEFONAKTIEBOLAGET LM ERICSSON) 30 October 2002 (2002-10-30) description, paragraphs 2-42, and figures 1-7 | 1-23 |
| A | CN 116506777 A (HONOR DEVICE CO., LTD.) 28 July 2023 (2023-07-28) entire document | 1-23 |
| A | CN 212784793 U (HUAWEI TECHNOLOGIES CO., LTD.) 23 March 2021 (2021-03-23) entire document | 1-23 |
| A | CN 218497411 U (HONOR DEVICE CO., LTD.) 17 February 2023 (2023-02-17) entire document | 1-23 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **30 October 2024** | **06 November 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/109659**

| Patent document cited in search report | | | Publication date (day/month/year) | Patent family member(s) | | | Publication date (day/month/year) |
|---|---|---|---|---|---|---|---|
| CN | 116995781 | A | 03 November 2023 | CN | 116995781 | B | 22 March 2024 |
| CN | 115001063 | A | 02 September 2022 | WO | 2023040630 | A1 | 23 March 2023 |
| | | | | HK | 40077907 | A0 | 24 March 2023 |
| | | | | CN | 15001063 | B | 16 May 2023 |
| | | | | EP | 4207551 | A1 | 05 July 2023 |
| | | | | HK | 40077907 | A1 | 28 July 2023 |
| | | | | US | 2024128775 | A1 | 18 April 2024 |
| | | | | EP | 4207551 | A4 | 07 August 2024 |
| EP | 1253696 | A1 | 30 October 2002 | WO | 02089287 | A1 | 07 November 2002 |
| | | | | US | 2004207363 | A1 | 21 October 2004 |
| | | | | AU | 2002249272 | A1 | 11 November 2002 |
| CN | 116506777 | A | 28 July 2023 | CN | 116506777 | B | 13 October 2023 |
| CN | 212784793 | U | 23 March 2021 | CN | 113452100 | A | 28 September 2021 |
| | | | | WO | 2021197226 | A1 | 07 October 2021 |
| CN | 218497411 | U | 17 February 2023 | WO | 2024016616 | A1 | 25 January 2024 |
| | | | | CN | 118119913 | A | 31 May 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311227254